# EUROPÄISCHE PATENTSCHRIFT

(11) **EP 1 487 314 B1**
(45) Veröffentlichungstag und Bekanntmachung des Hinweises auf die Patenterteilung: **10.05.2006**
(21) Anmeldenummer: 03702171.4
(22) Anmeldetag: 08.01.2003
(51) Int. Cl.: A47J 31/40

(54) **ESPRESSOMASCHINE**
ESPRESSO MACHINE
MACHINE A EXPRESSO

(30) Priorität: 25.03.2002 AT 4602002
(43) Veröffentlichungstag der Anmeldung: 22.12.2004
(73) Patentinhaber: Alexander Schärf & Söhne Gesellschaft M.B.H., 2700 Wiener Neustadt (AT)
(72) Erfinder: SCHÄRF, Reinhold, A-2700 Wiener Neustadt (AT)
(74) Vertreter: Sonn & Partner Patentanwälte
(86) Internationale Anmeldenummer: PCT/AT2003/000003
(87) Internationale Veröffentlichungsnummer: WO 2003/079875

(56) Entgegenhaltungen:
- EP-A- 0 177 462
- DE-A- 1 654 949
- FR-A- 2 367 275
- FR-A- 2 367 464

## Beschreibung

Die Erfindung betrifft eine Espressomaschine mit einem in einem Dosierkolbenzylinder aufgenommenen Dosierkolben zum Pressen einer in dem Dosierkolbenzylinder dosierten Wassermenge durch einen mit Kaffeepulver gefüllten Siebträger, wobei der Dosierkolben von einem hydraulisch angetriebenen Arbeitskolben angetrieben wird, der mit dem Dosierkolben über eine Kolbenstange fest verbunden ist.

Derartige Espressomaschinen sind als hydraulische Kolbenespressomaschinen bekannt, bei welchen bisher die Dosierung der Wassermenge über eine die Position des Dosierkolbens feststellende Abtasteinrichtung bestimmt wurde.

Aus der DE 1 579 528 A ist eine derartige Kolbenespressomaschine bekannt, bei welcher zur Dosierung der Wassermenge eine Abtasteinrichtung mit einem drehbaren Hebel vorgesehen ist, an welchem ein vertikal von oben in einen den Dosierkolben umgebenden Zylinder ragender Abtaststift verbunden ist, wobei der Zylinder an seiner Oberseite drei verschiedene Ringstufen zur Abtastung mittels des Dosierkolbens aufweist. Zur Portionierung der Wassermenge wird der Abtaststift beim Betätigen eines Betätigungsknopfs unterschiedlich weit verschwenkt, so dass der Dosierkolben gehoben wird, bis der Abtaststift mit einer Ringstufe in Kontakt kommt, und somit in seine Ausgangsposition zurück bewegt wird. Eine weitere Espressomachine nach dem Oberbegriff des unabhängigen Anspruchs 1 ist aus DE-A-1 654 949 bekannt.

Ziel der vorliegenden Erfindung ist eine Espressomaschine der eingangs angeführten Art zu schaffen, bei welcher die Steuerung zur Dosierung der Wassermenge verbessert wird, insbesondere soll auch eine Möglichkeit geschaffen werden, bei welcher die Dosierung der Wassermenge elektronisch gesteuert werden kann.

Dies wird bei einer Espressomaschine der eingangs angeführten Art dadurch erlangt, dass eine die Position der Kolbenstange abtastende Sensoreinrichtung zur Dosierung der Wassermenge vorgesehen ist. Durch die die Position der Kolbenstange erfassende Sensoreinrichtung kann eine wesentlich genauere, im Prinzip stufenlose Dosierung der zu portionierenden wassermenge erlangt werden und es können aufwendige, bisher übliche mechanische Abtasteinrichtungen zum Detektieren der Position des Dosierkolbens entfallen.

Insbesondere ist es von Vorteil, wenn die Sensoreinrichtung zumindest einen berührungslosen Sensor aufweist, bei welchem aufwendige mechanische schwenkbar gelagerte Abtasteinrichtungen entfallen können und bei dem eine gewisse Freiheit bei der Anordnung des Sensors möglich ist. Zudem werden durch die Portionierung keine wesentlichen Geräusche verursacht.

Auf konstruktiv einfache Weise lässt sich der von der Kolbenstange zurückgelegte Weg bzw. deren Position und somit die im Dosierkolbenzylinder dosierte Wassermenge feststellen, wenn die Abtastrichtung des Sensors im Wesentlichen senkrecht zur Achse der Kolbenstange verläuft.

Wenn der Sensor zwischen dem Dosierkolbenzylinder und einem den Arbeitskolben umgebenden Arbeitszylinder angeordnet ist, kann die Position der Kolbenstange, die während dem Hub teilweise sowohl im Dosierkolbenzylinder als auch im Arbeitszylinder von Wasser umgeben ist, in einer trockenen Umgebung abgetastet werden.

Für eine konstruktiv besonders einfache und genaue Positionsbestimmung der Kolbenstange zur Portionierung der Wassermenge ist es günstig, wenn die Sensoreinrichtung zumindest einen opto-elektronischen Sensor aufweist. Insbesondere kann durch das Vorsehen eines opto-elektronischen Sensors die erfasste Position der Kolbenstange direkt in einer das ermittelte Signal umsetzenden Sensoreinheit weiterverarbeitet werden und somit eine elektronische Steuerung der Dosierkolbenbewegung erlangt werden. Hierdurch wird eine traditionelle Kolbenespressomaschine mit ihren bekannten Vorzügen hinsichtlich der hohen Qualität des zubereiteten Espressos mit modernen elektronischen Systemen, insbesondere auch mit elektronischen Verrechnungssystemen in der Gastronomie, kompatibel. Anstelle des opto-elektronischen Sensors kann selbstverständlich auch jeder andere, eine einfache Umsetzung in ein elektronisches Signal ermöglichender Sensor, beispielsweise ein Hall-Sensor verwendet werden.

Wenn der opto-elektronische Sensor über ein Glasfaserkabel mit einer opto-elektronischen Sensoreinheit verbunden ist, kann der vergleichsweise kleine opto-elektronische Sensor problemlos an einer zur Abtastung der Kolbenstangen-Position günstigen Stelle angebracht werden und die das vom opto-elektronischen Sensor ermittelte Signal weiterverarbeitende opto-elektronische Sensoreinheit räumlich getrennt von dem opto-elektronischen Sensor angeordnet werden. Im einfachsten Fall wird der Sensor lediglich durch das Ende der Glasfaser gebildet sein.

Zur Ansteuerung der Sensoreinrichtung und um die von der Sensoreinrichtung erfasste Position der Kolbenstange mit weiteren Parametern der Espressomaschine zu verknüpfen, ist es von Vorteil, wenn die Sensoreinrichtung einer Steuerungselektronik-Einheit der Espressomaschine zugeordnet ist. Insbesondere ist es vorteilhaft, wenn der Steuerungselektronik-Einheit Portioniertasten zur Bestimmung der zu dosierenden Wassermenge zugeordnet sind, da somit direkt über die Betätigung einer Positioniertaste die gewünschte Wassermenge dosiert werden kann.

Für eine einfache Erfassung der Kolbenstangenposition, bei welcher nicht der zurückgelegte Weg der Kolbenstange gemessen werden muss, sondern eine bestimmte Position der Kolbenstange unabhängig von dem Ausgangspunkt der Kolbenstange detektiert werden kann, ist es von Vorteil, wenn die Kolbenstange zur Positionserkennung zumindest eine Markierung aufweist.

Um unterschiedliche Positionen der Kolbenstange auf einfache Weise detektieren zu können, ist es günstig, wenn die Kolbenstange zur Positionserkennung mehrere, vorzugsweise 10 bis 30, Abtastringe aufweist. Wenn die Abtastringe eine Höhe zwischen 0,1 und 10 mm, vorzugsweise von 0,5 mm aufweisen, ist eine sehr genaue Bestimmung der Position der Kolbenstange möglich, wodurch eine sehr genaue Dosierung der gewünschten Wassermenge möglich ist, wobei vorteilhafterweise der Abstand zwischen den Abtastringen zwischen 0,1 und 10 mm, vorzugsweise 1 mm beträgt. Die Skalierung kann selbstverständlich noch feiner gewählt werden, wodurch eine im Wesentlichen stufenlose Dosierung der gewünschten Wassermenge möglich ist.

Die Abtastringe können auf einfache Weise mittels Oberflächenbehandlung der Kolbenstange, z.B. durch Laserbearbeitung, hergestellt werden. In der Praxis hat sich als vorteilhaft erwiesen, wenn die Kolbenstange aus Stahl oder dergl. besteht und die Abtastringe aus einem Material bestehen, das im Wesentlichen die selbe Härte wie das Material der Kolbenstange aufweist, wobei die Abtastringe aus einem Material auf Keramikbasis bestehen können. Zur Herstellung der Kolbenstange mit eingesetzten Keramikringen werden zunächst Rillen in die Kolbenstange gefräst, danach die Keramikeinsätze aufgebracht und sodann die Oberfläche der Kolbenstange bearbeitet, so dass die Oberfläche der Kolbenstange im Bereich der Abtastringe eine im Wesentlichen einheitliche Oberflächenrauigkeit aufweist. Die im Wesentlichen einheitliche Oberflächenrauigkeit ist insbesondere beim Eintritt der Kolbenstange in den Arbeitszylinder von Vorteil, da somit ein dichter Abschluss des Arbeitszylinders gewährleistet ist.

Die Erfindung wird nachfolgend anhand von in der Zeichnung dargestellten bevorzugten Ausführungsbeispielen, auf die sie jedoch nicht beschränkt sein soll, noch weiter erläutert. Es zeigen:
Fig. 1 schematisch eine teilweise geschnittene Ansicht der Espressomaschine;
Fig. 2 im Detail II einen opto-elektronischen Sensor zur Erfassung der Kolbenstangenposition;
Fig. 3 eine Ansicht der Kolbenstange mit Abtastringen;
Fig. 4 schematisch einen Schaltplan der Steuerungselektronik für die Positionserfassung der Kolbenstange.

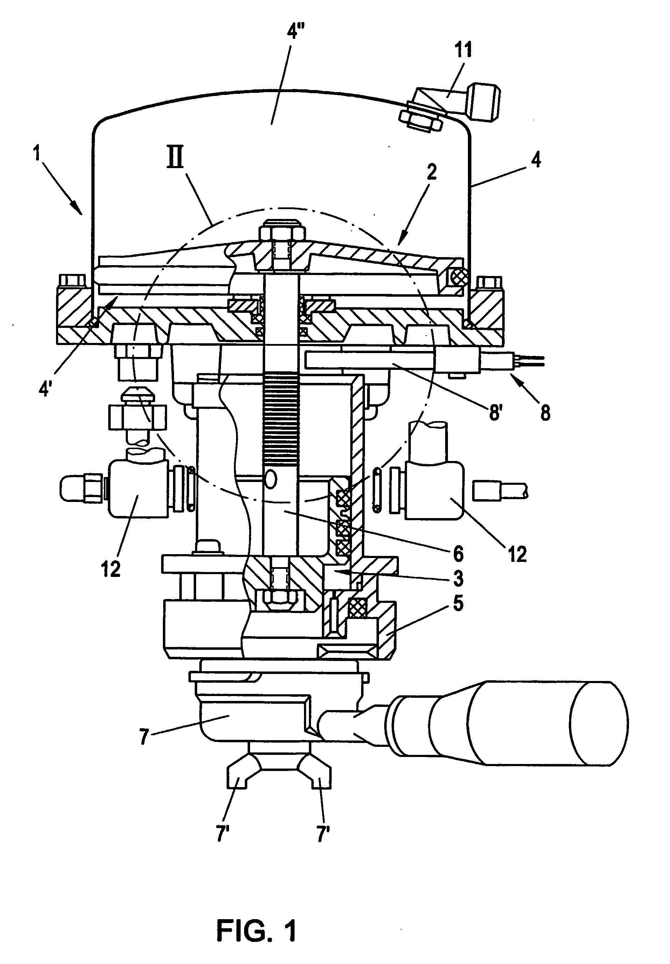

In Fig. 1 ist schematisch eine Espressomaschine 1 mit einem Arbeitskolben 2 und einem Dosierkolben 3 gezeigt, die über eine Kolbenstange 6 miteinander verbunden sind. Der Arbeitskolben 2 ist in einem Arbeitszylinder 4 aufgenommen und dient zum Antrieb des im Dosierkolbenzylinder 5 gleitend gelagerten Dosierkolbens 3, der in seiner untersten Stellung das in den Dosierkolbenzylinder 5 eingebrachte Wasser gegen Kaffeepulver, das in einen Siebträger 7 eingefüllt wurde, drückt, so dass Espressokaffee aus den Öffnungen 7' im Siebträger 7 austritt.

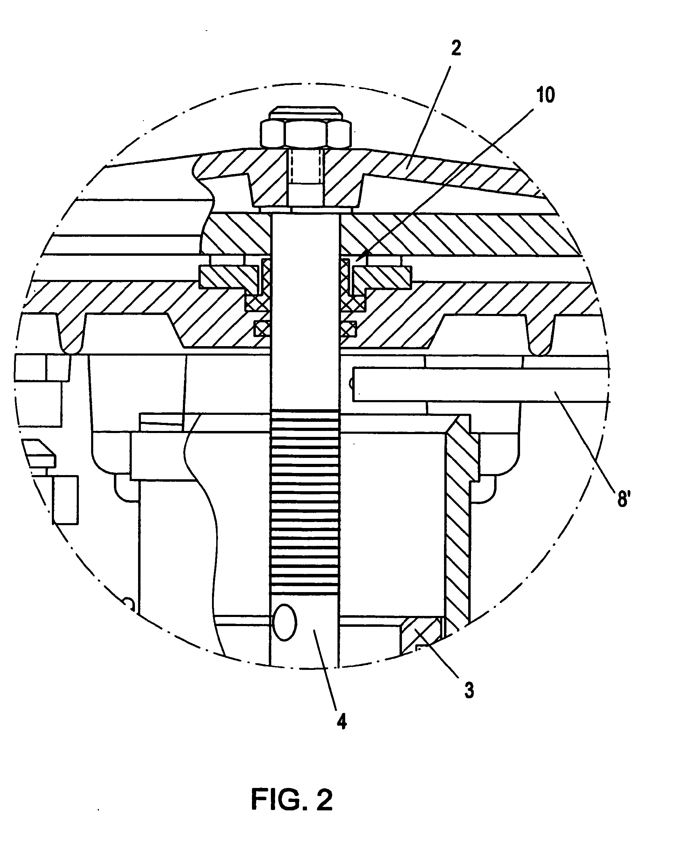

Zum Heben des Dosierkolbenzylinders 5 zur Kaffeeherstellung wird Wasser in den unteren Teil 4' des Arbeitszylinders 4 und zugleich Heißwasser in den Dosierkolbenzylinder 5 geleitet, so dass die beiden Kolben 2, 3 nach oben verfahren. Die in den Dosierkolbenzylinder 5 eingeleitete Wassermenge zur Portionierung des gewünschten Espressokaffees wird über die Position der Kolbenstange 6 gemessen, deren Stellung über eine Sensoreinrichtung 8 vorzugsweise mit einem opto-elektronischen Sensor 8' (s. auch Fig. 2) detektiert wird.

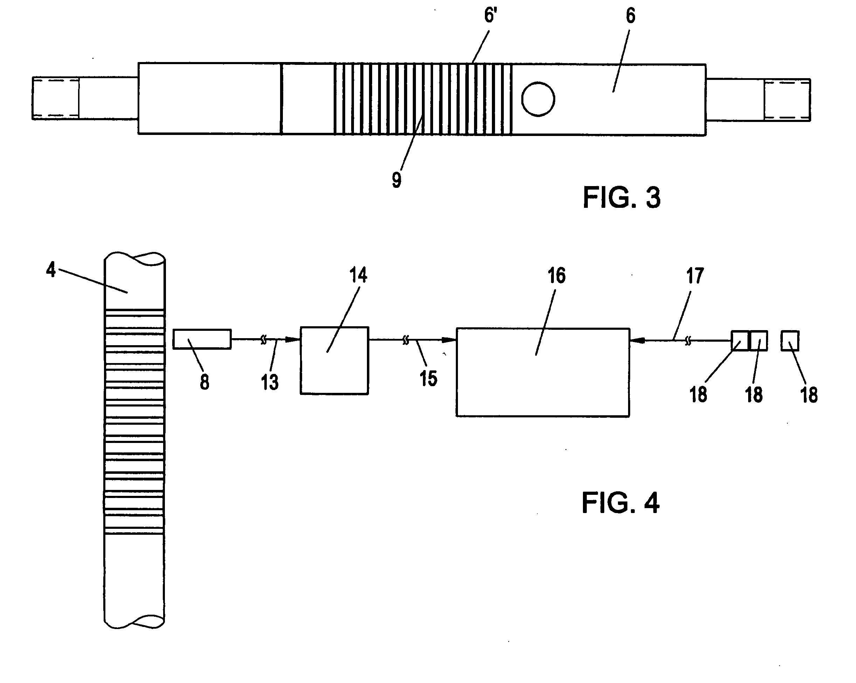

Wie insbesondere in Fig. 3 ersichtlich weist die Kolbenstange 6 hierzu ca. 20 Abtastringe 9 auf, die von dem opto-elektronischen Sensor 8 erfasst werden können. Die Abtastringe 9 bestehen aus einem keramischen Material, das zuvor in die Kolbenstange eingefräste Rillen eingesetzt wird. Danach wird die Oberfläche 6' der Kolbenstange 6 bearbeitet, so dass eine im Wesentlichen einheitliche Oberflächenrauigkeit gegeben ist, wodurch etwaige Undichtheiten beim Durchtritt der Kolbenstange 6 durch die Öffnung 10 im Arbeitszylinder (vgl. Fig. 2) vermieden werden können. Beispielsweise kann die Oberflächenrauigkeit im Bereich der Abtastringe nach der Oberflächenbehandlung 0,001 mm betragen, und die Kolbenstange im restlichen Bereich eine Oberflächenrauigkeit von 0,04 mm aufweisen.

Wird vom opto-elektronischen Sensor 8' die Position der Kolbenstange 6 detektiert, welche der gewünschten Dosierung an Heißwasser im Dosierkolbenzylinder 5 entspricht, wird die Wasserzufuhr in den Arbeitszylinder 4 und den Dosierkolbenzylinder 5 unterbrochen und über den Wasseranschluss 11 im Arbeitszylinder 4 in den oberen Zylinderabschnitt 4" des Arbeitszylinders Wasser eingebracht, so dass der Arbeitskolben 2 nach unten gedrückt wird und dieser über die Verbindung mit der Kolbenstange 6 den Dosierkolben 3 nach unten verschiebt, wodurch das Heißwasser zur Kaffeeaufbereitung durch das im Siebträger 7 aufgenommene Kaffeepulver gepresst wird. Um ein Rückströmen des im Dosierkolbenzylinder 5 vorgesehenen Heißwassers zu verhindern, ist ein Rückschlagventil in der Zuleitung aus einem Heißwasserkessel vorgesehen (nicht gezeigt). In Fig. 1 sind noch seitliche Kühlwasseranschlüsse 12 ersichtlich, die zur Kühlung des Dosierkolbenzylinders 5 vorgesehen sind.

Aus dem schematischen Schaltplan in Fig. 4 ist insbesondere ersichtlich, dass die Sensoreinrichtung 8 den opto-elektronischen Sensor 8', dessen Abtastrichtung im Wesentlichen senkrecht zur Achse des Kolbens 4 angeordnet ist, aufweist, der über ein Glasfaserkabel 13 mit einer opto-elektronischen Sensoreinheit 14 verbunden ist, wodurch eine platzsparende Anordnung des Sensors 8' zwischen dem Arbeitszylinder 4 und dem Dosierkolbenzylinder 5 (s. Fig. 2) möglich ist, während die eigentliche Sensoreinheit 14 der Sensoreinrichtung 8 hiervon räumlich getrennt angeordnet werden kann. Die vom opto-elektronischen Sensor 8' ermittelten elektrischen Signale werden über eine elektrische Leitung 15, beispielsweise ein Kupferkabel, zu der Steuerungselektronik-Einheit 16 der Espressomaschine übertragen. Der Steuerungselektronik-Einheit 16 sind über Leitungen 17 wiederum Portioniertasten 18 zugeordnet, über welche die gewünschte Wassermenge eingestellt werden kann.

Durch die vergleichsweise feine Skalierung der z.B. 20 Abtastringe, die eine Höhe von ca. 5 mm aufweisen, und in einem Abstand von ca. 1 mm angeordnet sind, kann eine sehr genaue Dosierung bzw. Portionierung der gewünschten Wassermenge in einer Vielzahl unterschiedlicher Möglichkeiten erlangt werden, wodurch praktisch eine stufenlose Portionierung der gewünschten Kaffeemenge erlangt werden kann.

Beim Betätigen einer Portioniertaste 18 durch den Bediener wird über die Steuerungselektronik-Einheit 16 ein Elektromagnetventil (nicht gezeigt) geöffnet, wodurch Wasser in den Arbeitszylinder 4 und den Dosierkolbenzylinder 5 synchron einfließt und somit die beiden Kolben 2, 3 nach oben verschoben werden. Die über den Sensor 8 erfassten und über das Glasfaserkabel 13 weitergeleiteten Signale werden in der opto-elektronischen Sensoreinheit 14 in elektrische Signale umgewandelt, die der Steuerungselektronik-Einheit 16 der Espressomaschine zugeleitet werden und beim Erreichen der zuvor über die Portioniertaste 18 eingestellten Wassermenge wird das Elektromagnetventil (nicht gezeigt) aktiviert, wodurch der Arbeitskolben 2 und der Dosierkolben 3 stehen bleiben. Zum Druckaufbringen wird, wie bereits vorstehend beschrieben, über den Anschluss 11 Wasser in den Arbeitszylinderabschnitt 14 eingebracht.

Somit wird die an und für sich bekannte Kolbenespressomaschine mit einer neuartigen Steuerung zur Portionierung der gewünschten Wassermenge versehen, wodurch die Einbindung der traditionellen Kolbenespressomaschine in elektronische Systeme, insbesondere elektronische Abrechnungssysteme in der Gastronomie, ermöglicht wird und erstmalig über eine nahezu geräuschlose Portionierungseinheit für Kaffeeespressomaschinen jede variable Menge Kaffeegetränk automatisch abgefüllt werden kann, ohne dass mechanisch darauf abgestellte Teile dafür verwendet werden. Daraus ergibt sich auch die Möglichkeit das Design, durch Wegfall der bislang zur Wasserportionierung von Kaffeeespressomaschinen notwendigen mechanischen Dosierelementen, raumsparend anzupassen.

## Patentansprüche

1. Espressomaschine (1) mit einem in einem Dosierkolbenzylinder (5) aufgenommenen Dosierkolben (3) zum Pressen einer in dem Dosierkolbenzylinder (5) dosierten Wassermenge durch einen mit Kaffeepulver gefüllten Siebträger (7), wobei der Dosierkolben (3) von einem hydraulisch angetriebenen Arbeitskolben (2) angetrieben wird, der mit dem Dosierkolben (3) über eine Kolbenstange (6) fest verbunden ist, **dadurch gekennzeichnet, dass** eine die Position der Kolbenstange (6) abtastende Sensoreinrichtung (8) zur Dosierung der Wassermenge vorgesehen ist.

2. Espressomaschine nach Anspruch 1, **dadurch gekennzeichnet, dass** die Sensoreinrichtung (8) zumindest einen berührungslosen Sensor (8') aufweist.

3. Espressomaschine nach Anspruch 2, **dadurch gekennzeichnet, dass** die Abtastrichtung des Sensors (8') im Wesentlichen senkrecht zur Achse der Kolbenstange verläuft.

4. Espressomaschine nach Anspruch 3, **dadurch gekennzeichnet, dass** der Sensor (8') zwischen dem Dosierkolbenzylinder (5) und einem den Arbeitskolben (2) umgebenden Arbeitszylinder (4) angeordnet ist.

5. Espressomaschine nach einem der Ansprüche 1 bis 4, **dadurch gekennzeichnet, dass** die Sensoreinrichtung (8) zumindest einen opto-elektronischen Sensor (8') aufweist.

6. Espressomaschine nach Anspruch 5, **dadurch gekennzeichnet, dass** der opto-elektronische Sensor (8') über ein Glasfaserkabel (13) mit einer opto-elektronischen Sensoreinheit (14) verbunden ist.

7. Espressomaschine nach einem der Ansprüche 1 bis 6, **dadurch gekennzeichnet, dass** die Sensoreinrichtung (8) einer Steuerungselektronik-Einheit (16) der Espressomaschine (1) zugeordnet ist.

8. Espressomaschine nach einem der Ansprüche 1 bis 7, **dadurch gekennzeichnet, dass** der Steuerungselektronik-Einheit (16) Portioniertasten (18) zur Bestimmung der zu dosierenden Wassermenge zugeordnet sind.

9. Espressomaschine nach einem der Ansprüche 1 bis 8, **dadurch gekennzeichnet, dass** die Kolbenstange (6) zur Positionserkennung zumindest eine Markierung aufweist.

10. Espressomaschine nach Anspruch 9, **dadurch gekennzeichnet, dass** die Kolbenstange (6) zur Positionserkennung mehrere, vorzugsweise 10 bis 30, Abtastringe (9) aufweist.

11. Espressomaschine nach Anspruch 10, **dadurch gekennzeichnet, dass** die Abtastringe (9) eine Höhe zwischen 0,1 und 10 mm, vorzugsweise von 0,5 mm aufweisen.

12. Espressomaschine nach Anspruch 10 oder 11, **dadurch gekennzeichnet, dass** der Abstand zwischen den Abtastringen (9) zwischen 0,1 und 10 mm, vorzugsweise 1 mm beträgt.

13. Espressomaschine nach einem der Ansprüche 9 bis 12, **dadurch gekennzeichnet, dass** die Abtastringe (9) mittels Oberflächenbehandlung der Kolbenstange, z.B. durch Laserbearbeitung, herstellbar sind.

14. Espressomaschine nach einem der Ansprüche 9 bis 13, **dadurch gekennzeichnet, dass** die Kolbenstange (6) aus Stahl oder dergl. besteht und die Abtastringe (9) aus einem Material bestehen, das im Wesentlichen die selbe Härte wie das Material der Kolbenstange (6) aufweist.

15. Espressomaschine nach Anspruch 14, **dadurch gekennzeichnet, dass** die Abtastringe (9) aus einem Material auf Keramikbasis bestehen.

16. Espressomaschine nach einem der Ansprüche 9 bis 15, **dadurch gekennzeichnet, dass** die Oberfläche (6') der Kolbenstange (6) im Bereich der Abtastringe (9) eine im Wesentlichen einheitliche Oberflächenrauigkeit aufweist.

## Claims

1. An espresso machine (1) comprising a metering piston (3) received in a metering piston cylinder (5) for pressing an amount of water metered in the metering piston cylinder (5) through a portafilter (7) filled with coffee powder, the metering piston (3) being driven by a hydraulically driven working piston (2) which is fixedly connected to the metering piston (3) via a piston rod (6), **characterised in that** a sensor means (8) scanning the position of the piston rod (6) is provided for metering the amount of water.

2. An espresso machine according to claim 1, **characterised in that** the sensor means (8) comprises at least one contact-free sensor (8').

3. An espresso machine according to claim 2, **characterised in that** the scanning direction of the sensor (8') extends substantially perpendicular to the axis of the piston rod.

4. An espresso machine according to claim 3, **characterised in that** the sensor (8') is arranged between the metering piston cylinder (5) and a working cylinder (4) surrounding the working piston (2).

5. An espresso machine according to any one of claims 1 to 4, **characterised in that** the sensor means (8) includes at least one opto-electronic sensor (8').

6. An espresso machine according to claim 5, **characterised in that** the opto-electronic sensor (8') is connected to an opto-electronic sensor unit (14) via a glass fiber cable (13).

7. An espresso machine according to any one of claims 1 to 6, **characterised in that** the sensor means (8) is associated with a control electronics unit (16) of the espresso machine (1).

8. An espresso machine according to any one of claims 1 to 7, **characterised in that** the control electronics unit (16) has associated portioning keys (18) for determining the amount of water to be metered.

9. An espresso machine according to any one of claims 1 to 8, **characterised in that** the piston rod (6) has at least one mark for recognizing the position thereof.

10. An espresso machine according to claim 9, **characterised in that** the piston rod (6) has several, preferably from 10 to 30, scanning rings (9) for recognizing the position thereof.

11. An espresso machine according to claim 10, **characterised in that** the scanning rings (9) have a height of between 0.1 and 10 mm, preferably 0.5 mm.

12. An espresso machine according to claim 10 or 11, **characterised in that** the distance between the scanning rings (9) is between 0.1 and 10 mm, preferably 1 mm.

13. An espresso machine according to any one of claims 9 to 12, **characterised in that** the scanning rings (9) can be produced by surface treatment of the piston rod, e.g. by a laser treatment thereof.

14. An espresso machine according to any one of claims 9 to 13, **characterised in that** the piston rod (6) is made of steel or the like, and the scanning rings (9) are made of a material which substantially has the same hardness as the material of the piston rod (6).

15. An espresso machine according to claim 14, **characterised in that** the scanning rings (9) are made of a ceramic-based material.

16. An espresso machine according to any one of claims 9 to 15, **characterised in that** the surface (6') of the piston rod (6) has a substantially uniform surface roughness in the region of the scanning rings (9).

## Revendications

1. Machine à expresso (1) avec un piston de dosage (3) logé dans un cylindre à piston de dosage (5) pour presser une quantité d'eau dosée dans le cylindre à piston de dosage (5) à travers un porte-filtre (7) rempli de café en poudre, le piston de dosage (3) étant entraîné par un piston de travail (2) entraîné hydrauliquement, lequel est relié de manière fixe au piston de dosage (3) par le biais d'une tige de piston (6), **caractérisée en ce qu'**un dispositif de détection (8) détectant la position de la tige de piston (6) est prévu pour doser la quantité d'eau.

2. Machine à expresso selon la revendication 1, **caractérisée en ce que** le dispositif de détection (8) comporte au moins un capteur sans contact (8').

3. Machine à expresso selon la revendication 2, **caractérisée en ce que** le sens de détection du capteur (8') est essentiellement perpendiculaire à l'axe de la tige de piston.

4. Machine à expresso selon la revendication 3, **caractérisée en ce que** le capteur (8') est disposé entre le cylindre à piston de dosage (5) et un cylindre de travail (4) entourant le piston de travail (2).

5. Machine à expresso selon l'une des revendications 1 à 4, **caractérisée en ce que** le dispositif de détection (8) comporte au moins un capteur optoélectronique (8').

6. Machine à expresso selon la revendication 5, **caractérisée en ce que** le capteur optoélectronique (8') est relié par le biais d'un câble à fibre de verre (13) à une unité de détection (14) optoélectronique.

7. Machine à expresso selon l'une des revendications 1 à 6, **caractérisée en ce que** le dispositif de détection (8) est attribué à une unité électronique de commande (16) de la machine à expresso (1).

8. Machine à expresso selon l'une des revendications 1 à 7, **caractérisée en ce que** des touches de mise en portion (18) sont attribuées à l'unité électronique de commande (16) pour déterminer la quantité d'eau à doser.

9. Machine à expresso selon l'une des revendications 1 à 8, **caractérisée en ce que** la tige de piston (6) comporte au moins un repère pour détecter la position.

10. Machine à expresso selon la revendication 9, **caractérisée en ce que** la tige de piston (6) comporte plusieurs anneaux de détection (9), de préférence 10 à 30, pour détecter la position.

11. Machine à expresso selon la revendication 10, **caractérisée en ce que** les anneaux de détection (9) ont une hauteur comprise entre 0,1 et 10 mm, de préférence de 0,5 mm.

12. Machine à expresso selon la revendication 10 ou 11, **caractérisée en ce que** l'écartement entre les anneaux de détection (9) est compris entre 0,1 et 10 mm, de préférence de 1 mm.

13. Machine à expresso selon l'une des revendications 9 à 12, **caractérisée en ce que** les anneaux de détection (9) peuvent être fabriqués au moyen de l'usinage des surfaces de la tige de piston, par exemple par usinage au laser.

14. Machine à expresso selon l'une des revendications 9 à 13, **caractérisée en ce que** la tige de piston (6) est en acier ou similaire et les anneaux de détection (9) sont fabriqués à partir d'un matériau qui comporte sensiblement la même dureté que le matériau de la tige de piston (6).

15. Machine à expresso selon la revendication 14, **caractérisée en ce que** les anneaux de détection (9) sont fabriqués à partir d'un matériau à base de céramique.

16. Machine à expresso selon l'une des revendications 9 à 15, **caractérisée en ce que** la surface (6') de la tige de piston (6) comporte dans la zone des anneaux de détection (9) une rugosité de surface essentiellement uniforme.
